# EUROPÄISCHE PATENTSCHRIFT

(11) **EP 1 309 463 B1**
(45) Veröffentlichungstag und Bekanntmachung des Hinweises auf die Patenterteilung: **06.05.2004**
(21) Anmeldenummer: 01980247.9
(22) Anmeldetag: 16.08.2001
(51) Int. Cl.: B60G 15/06, F16F 13/16

(54) **HYDRAULISCH DÄMPFENDES LAGER**
HYDRAULICALLY DAMPED BEARING
PALIER A AMORTISSEMENT HYDRAULIQUE

(30) Priorität: 17.08.2000 DE 10040201
(43) Veröffentlichungstag der Anmeldung: 14.05.2003
(73) Patentinhaber: Trelleborg Automotive Technical Centre GmbH, 56203 Höhr-Grenzhausen (DE)
(72) Erfinder: GRAEVE, Arndt, 56068 Koblenz (DE)
(74) Vertreter: Preissner, Nicolaus, Dipl.-Ing.
(86) Internationale Anmeldenummer: PCT/EP2001/009476
(87) Internationale Veröffentlichungsnummer: WO 2002/014095

(56) Entgegenhaltungen:
- EP-A- 0 410 397
- EP-A- 0 416 381
- FR-A- 2 572 338
- FR-A- 2 671 839
- GB-A- 613 253

## Beschreibung

Die vorliegende Erfindung betrifft ein Stützlager für ein Federbein, das eine Kolbenstange und eine Feder aufweist. Das Stützlager ist mit einem hydraulisch dämpfenden Lager versehen, das eine auf der Kolbenstange aufsitzende Innenhülse mit einem radial abragenden Ansatz und eine Außenhülse aufweist. Die Außenhülse ist über einen Elastomerkörper mit der Innenhülse verbunden und bildet mit dieser zwei Kammern aus, die mit einer hydraulisch dämpfenden Flüssigkeit gefüllt und miteinander verbunden sind. Die Außenhülse weist einen radial abragenden Teller auf, an dem sich die Feder über einen Elastomerkörper abstützt.

Ein derartiges Stützlager wird in der FR 2 572 338 A1 beschrieben. Weiterhin ist aus der EP 0 416 381 A1 ein hydraulisch dämpfendes Federbein-Stützlager bekannt, das eine Innenhülse mit einem radial abragenden Ansatz aufweist. Eine Außenhülse stützt sich über einen Elastomerkörper an der Innenhülse ab. Die Außenhülse begrenzt mit der Innenhülse eine Kammer, die mit einer hydraulischen Flüssigkeit gefüllt ist. Von der Außenhülse ragt radial ein Teller ab. Der an der Innenhülse vorgesehene Ansatz begrenzt mit der Außenhülse einen Ringspalt. Der einteilige Elastomerkörper bildet eine Umhüllung des Ansatzes.

Die EP 0 410 397 A1 beschreibt ein hydraulisch dämpfendes Federbein-Stützlager, das einen Ansatz aufweist, der formschlüssig in einer Flüssigkeitskammer liegt. Der Ansatz kann aus verschiedenen Materialien gefertigt sein, beispielsweise aus einem hochelastischen Gummi.

Die FR 2 671 839 A1 offenbart ein hydraulisch dämpfendes Federbein-Stützlager, das eine in einer Kammer angeordnete Entkopplungsmembran aufweist. Von der Unterseite eines Tellers ragen zwei konzentrisch angeordnete, jeweils zylinderförmige Elastomerkörper ab. Der äußere Elastomerkörper stützt stirnseitig die Feder des Federbeins ab.

Außerdem ist aus der EP 0 456 959 B1 ein hydraulisch dämpfendes Gummilager bekannt, bei dem zwischen dem von der Innenhülse abragenden Ansatz und der Außenhülse ein Einsatz zum Ausbilden der flüssigkeitsleitenden Verbindung zwischen den beiden Kammern vorgesehen ist. Die Herstellung dieses Lagers ist daher relativ aufwendig.

Unter Erregung wird die Innenhülse gegenüber der Außenhülle verschoben, vorzugsweise in axialer Richtung, so daß sich das Volumen der beiden Kammern ändert. Ein Volumenausgleich erfolgt durch ein Strömen der hydraulischen Flüssigkeit über die Verbindung zwischen den beiden Kammern. Die hierbei auftretende hydraulische Dämpfung wirkt der Erregung entgegen. Bei dem bekannten Lager kommt diese hydraulische Dämpfung auch bei einer äußeren Erregung mit nur geringen Frequenzen zum Tragen. Das Lager weist daher stets eine hohe Steifigkeit im höherfrequenten Bereich auf. Auch eine Erregung mit nur kleiner Amplitude wird daher auf die Außenhülse übertragen, und es besteht eine schlechte akustische Isolation.

Eine derartige Übertragung kleiner Amplituden ist nicht erwünscht. Insbesondere beim Einsatz in Kraftfahrzeugen soll eine Erregung mit kleiner Amplitude möglichst nicht auf die Außenhülse übertragen werden. Die Steifigkeit des Lagers soll daher bei einer Erregung bei bestimmten Frequenzen gering sein, möglichst unterhalb der statistischen Steifigkeit liegen. Sobald eine Erregung mit großer Amplitude bei geringen Frequenzen auftritt, beispielsweise beim Überfahren eines Randsteins, muß die Steifigkeit des Lagers allerdings groß sein. Nur durch diese große Steifigkeit kann eine Erregung mit großer Amplitude abgefangen und eine Beschädigung des Lagers verhindert werden.

Aufgabe der vorliegenden Erfindung ist es daher, ein Lager bereitzustellen, das bei einfacher Herstellung ein verbessertes Steifigkeitsverhalten aufweist.

Erfindungsgemäß wird diese Aufgabe bei einem Lager der eingangs genannten Art dadurch gelöst, daß der Ansatz der Innenhülse mit der Außenhülse einen die Kammern verbindenden Ringspalt ausbildet und die Elastomerkörper einteilig ausgebildet sind. Der Ansatz ist mit einer Umhüllung aus elastomerem Material umgeben, deren Dicke variabel ist. Der Elastomerkörper ist im wesentlichen zylindrisch ausgebildet und ragt von der Unterseite des Tellers ab. Zudem weist der Elastomerkörper stirnseitig eine Anlagefläche für die Feder des Federbeins auf.

Die Kolbenstange wird durch das oben beschriebene hydraulisch dämpfende Lager abgestützt und an der Innenhülse befestigt. Im Unterschied zu bekannten Lagern kann der bei diesen vorgesehene Einsatz vollständig entfallen. Es sind daher weniger Einzelteile erforderlich. Auch die Montage wird wesentlich vereinfacht.

Weiter wird das Steifigkeitsverhalten gegenüber dem bekannten Lager wesentlich verbessert. Da der Ansatz an der mit einem erregbaren Bauteil verbindbaren Innenhülse angebracht ist, strömt die hydraulische Flüssigkeit unter Erregung in Gegenrichtung zur Bewegung dieses Ansatzes. Ein Mitreißen der Flüssigkeit durch die Bewegung des Ansatzes wird vermieden. Durch die Flüssigkeitsströmung entgegen der Erregung kann eine Absenkung der Steifigkeit erreicht werden, die bis zum Erreichen der Eigenfrequenz der Füssigkeitsströmung vorliegt. Der Ansatz kann hierbei ring- oder sternförmig oder in Form einzelner Finger ausgebildet sein.

Hierdurch wird erreicht, daß die Steifigkeit des Lagers bei einer Erregung mit kleiner Amplitude bis zu einer bestimmten Frequenz nicht oder nur unwesentlich ansteigt. In Abhängigkeit von der hydraulisch wirksamen Fläche zum Querschnitt der flüssigkeitsleitenden Verbindung wird sogar ein Absenken der dynamischen Steifigkeit unter die statische Steifigkeit erreicht. Dieses Absenken wird auch als Unterschwingen bezeichnet. Die hydraulisch wirksame Fläche entspricht hierbei im wesentlichen der Oberfläche des Ansatzes an der Innenhülse. Der Querschnitt der flüssigkeitsleitenden Verbindung ist bei Verwendung eines runden Ansatzes und einer runden Außenhülle kreisbogenförmig. Solange das Verhältnis zwischen der hydraulischen Fläche und dem Querschnitt kleiner als 1 ist, läßt sich die gewünschte Steifigkeitsabsenkung erreichen.

Die Grenzfrequenz, ab der eine Verhärtung des Lagers und eine entsprechende Erhöhung der Steifigkeit eintritt, hängt vom Querschnitt der flüssigkeitsleitenden Verbindung sowie der Masse der Flüssigkeit in dieser Verbindung ab. Diese Frequenz nimmt bei einer Erhöhung des Querschnitts zu und sinkt bei einer Erhöhung der Masse ab, beispielsweise durch eine Verlängerung der flüssigkeitsleitenden Verbindung. Sie ist eine Eigenfrequenz der in der Verbindung oszillierenden Flüssigkeit. Daher kann sie bei dem erfindungsgemäßen Lager durch eine Variation von Durchmesser und/oder Dicke des Ansatzes verändert und an den jeweiligen Einsatzfall angepaßt werden. Eine Änderung der Außenhülse ist nicht erforderlich.

Der Ansatz ist mit einer Umhüllung aus elastomerem Material versehen. Durch eine Variation der Dicke dieser Umhüllung können Querschnitt und Länge der flüssigkeitsleitenden Verbindung verändert und somit das Lagerverhalten eingestellt werden. Weiter verhindert diese Umhüllung eine Beschädigung der Außenhülle bei unzulässig großer Erregung, dient also als innerer Anschlag.

Vorteilhafte Ausgestaltungen und Weiterbildungen der Erfindung gehen aus den abhängigen Ansprüchen hervor.

In vorteilhafter Ausgestaltung ist die Innenhülse in einen langgezogenen Bereich der Außenhülse hinein verlängert. Der Elastomerkörper erstreckt sich dann in den Zwischenraum zwischen dem Bereich und der Innenhülse und realisiert die statische Steifigkeit des erfindungsgemäßen Lagers.

Die Außenhülse kann hierbei zweiteilig ausgebildet werden. Die Trennung zwischen den beiden Teilen der Außenhülse erfolgt vorteilhaft derart, daß der erste Teil den Abschnitt der Außenhülse mit größerem Durchmesser und dem radial einwärts ragenden Flansch ausbildet. Der zweite Teil der Außenhülse stellt den langgezogenen Bereich bereit.

Vorteilhaft weist das Stützlager einen oberen und einen unteren Teller auf, die zur Bildung der Außenhülse mit abragenden, im wesentlichen zylindrischen Bereichen versehen sind. Durch die Verwendung dieser von einander getrennten Teller werden Herstellung und Montage des Stützlagers wesentlich vereinfacht.

Gemäß einer vorteilhaften Weiterbildung geht der abragende Bereich des unteren Tellers in einen im wesentlichen kegelförmigen Bereich über. Dieser kegelförmige Bereich stellt einen Anschlagpuffer für das Federbein bereit und verhindert unzulässige Überanspruchungen und Wege. Er dient weiter gegebenenfalls zur Aufnahme einer Zusatzfeder.

Nach einer vorteilhaften Ausgestaltung weist der untere Teller einen weiteren Bereich auf, der in Richtung zum oberen Teller abragt und in den Bereich des oberen Tellers hineinragt. Die beiden Teller werden durch diesen weiteren Bereich zueinander zentriert.

Vorteilhaft erstreckt sich der Elastomerkörper zwischen die Teller hinein. Er kann insbesondere die gesamte Fläche eines der beiden Teller abdecken. Auf diese Weise wird eine zuverlässige Abdichtung der Kammern und der flüssigkeitsleitenden Verbindung erreicht. Weiter wird ein direkter Kontakt zwischen den Tellern verhindert. Eventuell auftretende Relativbewegungen der Teller im Betrieb führen dann nicht zu störenden Geräuschen.

In vorteilhafter Weiterbildung ist die Anlagefläche für die Abstützung der Feder unabhängig von der Innenhülse abgestützt. Ein derartiges Stützlager wird als entkoppeltes Stützlager bezeichnet. Es ermöglicht optimale Geräuschisolation und Fahrkomfort.

Vorteilhaft weist das Stützlager mehrere Bolzen zur Befestigung an einer Karosserie auf, die beide Teller durchgreifen. Die Teller werden somit gleichzeitig aneinander und an der Karosserie fixiert.

Nachstehend wird die Erfindung anhand von Ausführungsbeispielen beschrieben, die schematisch in der Zeichnung dargestellt sind. Für gleiche oder funktionsidentische Bauteile werden hierbei durchgehend dieselben Bezugszeichen verwendet. Dabei zeigt:
- Figur 1: einen schematischen, perspektivisch dargestellten Querschnitt durch ein erfindungsgemäßes Stützlager in erster Ausgestaltung;
- Figur 2: einen Halbschnitt durch das hydraulisch dämpfende Lager in dem Stützlager gemäß Figur 1;
- Figur 3: einen Halbschnitt durch eine weitere Ausgestaltung eines erfindungsgemäßen Stützlagers; und
- Figur 4: einen Halbschnitt durch das Lager des Stützlager gemäß Figur 3.

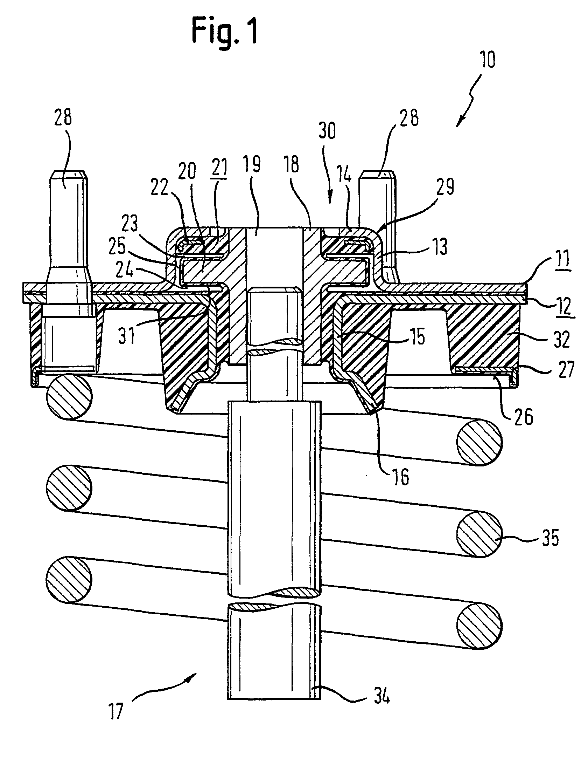

Figur 1 zeigt einen schematischen, perspektivisch dargestellten Querschnitt durch ein Stützlager 10 mit einem oberen Teller 11 und einem unteren Teller 12. Der obere Teller 11 ist mit einem im wesentlichen zylindrischen Bereich 13 versehen, der nach oben abragt. An seinem Ende ist dieser Bereich 13 mit einem radial einwärts ragenden Flansch 14 versehen. Der untere Teller 12 weist ebenfalls einen im wesentlichen zylindrischen Bereich 15 auf, der nach unten abragt und in einen kegelförmigen Bereich 16 übergeht. Die Bereiche 13, 14, 15 bilden eine Außenhülse 29. Der Bereich 16 dient als Aufnahme für eine nicht näher dargestellte Zusatzfeder des Federbeins 17.

In der Außenhülse 29 ist eine Innenhülse 18 mit einer durchgehenden Bohrung 19 und einem radial auswärts abragenden Ansatz 20 angeordnet. In der Bohrung 19 ist eine Kolbenstange 34 des Federbeins 17 befestigt. Die Kolbenstange 34 wird erregt, beispielsweise durch Fahrbahnunebenheiten. Die Innenhülse 18 und die Außenhülse 29 sind hierbei über einen Elastomerkörper 21 verbunden. Dieser Elastomerkörper 21 ist an seinem dem Flansch 14 zugewandten Ende mit einer Verstärkungseinlage 22 versehen, die die Dichtwirkung verbessert. Er erstreckt sich zwischen die beiden Teller 11, 12 und zwischen eine Verlängerung der Innenhülse 18 und den Bereich 15 des unteren Tellers 12.

Zwischen der Innenhülse 18 und der Außenhülse 29 werden zwei Kammern 23, 24 gebildet. Diese Kammern 23, 24 sind mit einer hydraulisch dämpfenden Flüssigkeit gefüllt und über einen Ringspalt 25 miteinander verbunden. Der Ringspalt 25 ist hierbei zwischen dem Ansatz 20 und dem Bereich 13 der Außenhülse 29 ausgebildet. Es entsteht ein hydraulisch dämpfendes Lager 30, das im wesentlichen aus der Innenhülse 18, dem Ansatz 20, dem Elastomerkörper 21 und der Außenhülse 29 besteht.

Der Ansatz 20 ist mit einer Umhüllung 31 versehen, die ebenfalls materialeinstückig mit dem Elastomerkörper 21 ausgebildet ist. Durch eine Variation dieser Umhüllung 31 können die Abmessungen der Kammern 23, 24 und des Ringspalts 25 ohne Veränderungen an der Innenhülse 18 oder der Außenhülse 29 an unterschiedliche Randbedingungen angepaßt werden.

Das Stützlager 10 weist weiter einen im wesentlichen zylindrisch ausgebildeten Bereich 32 mit einer Einlage 27 auf. Der Bereich 32 umgibt die Bereiche 15, 16 des unteren Tellers 12. Er bildet eine Anlagefläche 26 für eine Feder 35 des Federbeins 17.

Zur Befestigung des gesamten Stützlagers 10 an einer nicht näher dargestellten Karosserie dienen mehrere Bolzen 28. Die Bolzen 28 durchgreifen beide Teller 11, 12 und zentrieren diese zueinander.

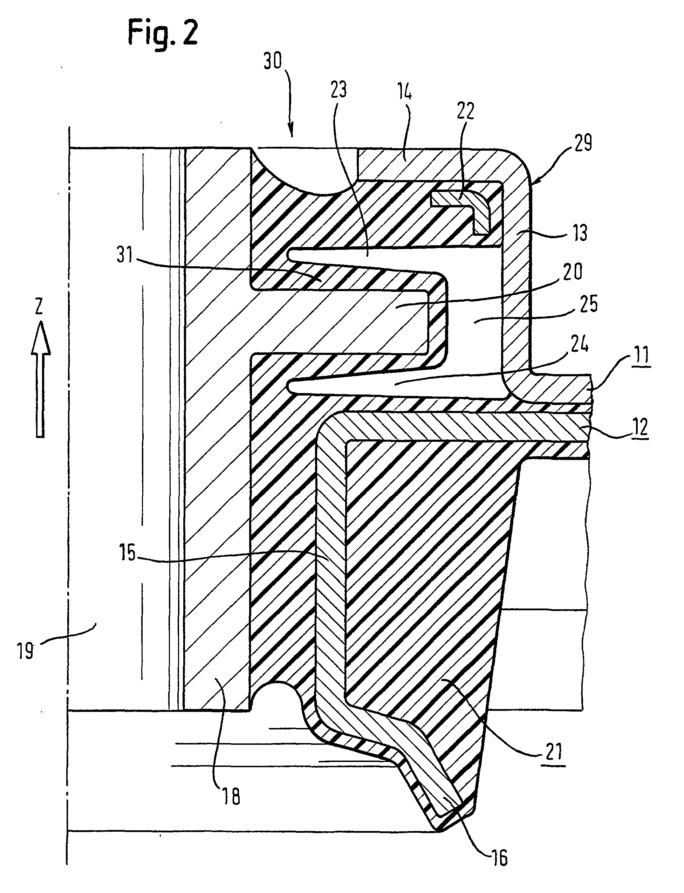

Aufbau und Funktion des Lagers 30 werden nachstehend anhand von Figur 2 näher erläutert. Sobald eine Erregung des Lagers 30 in Pfeilrichtung Z auftritt, wird die Innenhülse 18 gegenüber der Außenhülse 29 in dieser Erregungsrichtung Z verschoben. Der an der Innenhülse 18 angeordnete Ansatz 20 bewirkt eine Volumenänderung der Kammern 23, 24. Im dargestellten Ausführungsbeispiel wird das Volumen der Kammer 23 verkleinert und gleichzeitig das Volumen der Kammer 24 vergrößert. Die Flüssigkeit strömt daher in Gegenrichtung zur Erregungsrichtung Z durch den Spalt 25. In Abhängigkeit von der Größe des Ansatzes 20, der Dicke der Umhüllung 31 sowie dem Durchmesser der Außenhülse 29 wird ein Unterschwingen erreicht. Sobald die Frequenz der Erregung sich der Eigenfrequenz der oszillierenden Flüssigkeit nähert, erreicht die Steifigkeit des Lagers 30 ihren Minimalwert und steigt danach wieder an. Es wird somit bei kleinen Amplituden bis zu einer bestimmten Frequenz eine abfallende Steifigkeit erreicht. Gleichzeitig wird bei großen Amplituden im niederfrequenten Bereich die erforderliche hohe Steifigkeit bereitgestellt.

Die hydraulische Dämpfung findet bei diesem Ausführungsbeispiel des Lagers 30 vollständig oberhalb des unteren Tellers 12 statt. Der Durchmesser des Bereichs 13 der Außenhülse 29 ist daher größer als der Durchmesser des Bereichs 15, der auf der anderen Seite des Ansatzes 20 liegt. Durch einen Austausch des oberen Tellers 11 können somit rasch und einfach unterschiedliche Lager 30 hergestellt werden.

Die Innenhülse 18 ist nach unten verlängert und verläuft im wesentlichen parallel zu dem Bereich 15 des unteren Tellers 12. Der Elastomerkörper 21 erstreckt sich in den Zwischenraum zwischen dem Bereich 15 und der Innenhülse 18. Er stellt die gewünschte statische Steifigkeit bereit und wirkt gleichzeitig Bewegungen der Innenhülse 18 in eine Richtung quer zur Erregungsrichtung Z entgegen. Als Anschlag in Erregungsrichtung Z sowie die beiden anderen Raumrichtungen dient der Ansatz 20 mit seiner Umhüllung 31.

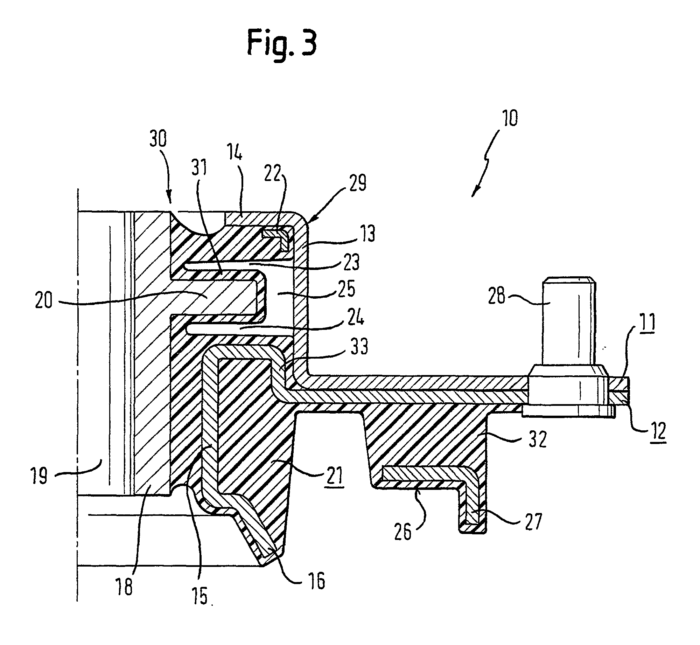

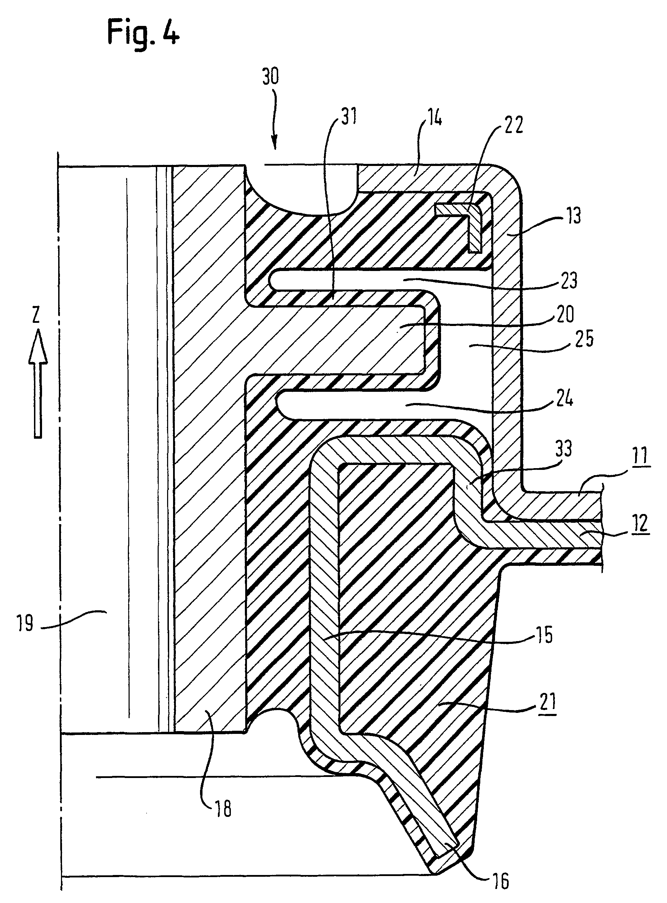

In den Figuren 3 und 4 ist eine weitere Ausgestaltung eines erfindungsgemäßen Stützlagers 10 und eines erfindungsgemäßen Lagers 30 dargestellt. Der untere Teller 12 weist in dieser Ausgestaltung einen weiteren Bereich 33 auf, der in Richtung zum oberen Teller 11 abragt. Der Bereich 33 ragt in den Bereich 13 des oberen Tellers 11 hinein. Hierdurch werden die beiden Teller 11, 12 zueinander zentriert und die Kammern 23, 24 abgedichtet.

Der Elastomerkörper 21 erstreckt sich hierbei zwischen die Bereiche 13, 33 und im weiteren Verlauf zwischen die Teller 11, 12 hinein. Auf diese Weise werden unerwünschte Geräusche bei einer Bewegung der Teller 11, 12 gegeneinander vermieden.

Neben einer vereinfachten Montage und einem verbesserten Steifigkeitsverhalten ergibt sich somit auch eine rasche einfache Anpassung an unterschiedliche Randbedingungen.

## Patentansprüche

1. Stützlager für ein Federbein (17), das eine Kolbenstange (34) und eine Feder (35) aufweist, mit einem hydraulisch dämpfenden Lager (30), das eine auf der Kolbenstange (34) aufsitzende Innenhülse (18) mit einem radial abragenden Ansatz (20) und eine Außenhülse (29) aufweist, die über einen Elastomerkörper (21) mit der Innenhülse (18) verbunden ist und mit dieser zwei Kammern (23, 24) ausbilden, die mit einer hydraulisch dämpfenden Flüssigkeit gefüllt und miteinander verbunden sind, wobei die Außenhülse (29) einen radial abragenden Teller (11) aufweist, an dem sich die Feder (35) über einen Elastomerkörper (32) abstützt, **dadurch gekennzeichnet, daß** der Ansatz (20) der Innenhülse (18) mit der Außenhülse (29) einen die Kammern (23, 24) verbindenden Ringspalt (25) ausbildet, daß die Elastomerkörper (21, 32) einteilig ausgebildet sind, wobei der Ansatz (20) mit einer Umhüllung (31) aus elastomerem Material umgeben ist, deren Dicke variabel ist und daß der Elastomerkörper (32) im wesentlichen zylindrisch ausgebildet ist und von der Unterseite des Tellers (11) abragt und stirnseitig eine Anlagefläche (26) für die Feder (35) des Federbeines (17) aufweist.

2. Lager nach Anspruch 1, **dadurch gekennzeichnet, daß** die Innenhülse (18) in einen langgezogenen Bereich (15) der Außenhülse (29) hinein verlängert ist und daß sich der Elastomerkörper (21) in den Zwischenraum zwischen dem Bereich (15) und der Innenhülse (18) hinein erstreckt.

3. Stützlager nach Anspruch 1 oder 2, **dadurch gekennzeichnet, daß** das Stützlager (10) einen oberen und einen unteren Teller (11, 12) aufweist, die zur Bildung der Außenhülse (26) mit abragenden, im wesentlichen zylindrischen Bereichen (13, 15) versehen sind.

4. Stützlager nach Anspruch 3, **dadurch gekennzeichnet, daß** der abragende Bereich (15) des unteren Tellers (12) in einen im wesentlichen kegelförmigen Bereich (16) übergeht.

5. Stützlager nach einem der Ansprüche 3 oder 4, **dadurch gekennzeichnet, daß** der untere Teller (12) einen weiteren Bereich (33) aufweist, der in Richtung zum oberen Teller (11) abragt und in den Bereich (13) des oberen Tellers (11) hineinragt.

6. Stützlager nach einem der Ansprüche 3 bis 5, **dadurch gekennzeichnet, daß** sich der Elastomerkörper (21) zwischen die Teller (11, 12) hinein erstreckt.

7. Stützlager nach einem der Ansprüche 1 bis 6, **dadurch gekennzeichnet, daß** die Anlagefläche (26) für die Abstützung der Feder (36) unabhängig von der Innenhülse (18) abgestützt ist.

8. Stützlager nach einem der Ansprüche 3 bis 7, **dadurch gekennzeichnet, daß** das Stützlager (10) mehrere Bolzen (28) zur Befestigung an einer Karosserie aufweist, die beide Teller (11, 12) durchgreifen.

## Claims

1. A mount for a spring strut (17) comprising a piston rod (34) and a spring (35), provided with a hydraulic fluid damper (30) comprising an inner barrel (18), sleeving said piston rod (34) and including a radially outswept boss (20), and an outer barrel (29) connected to said inner barrel (18) by an elastomer member (21) with which it forms two interconnected chambers (23, 24) filled with a hydraulic damping fluid, said outer barrel (29) comprising a radially outswept plate (11) supporting the spring (35) via an elastomer member (21), **characterized in that** said boss (20) of said inner barrel (18) forms with said outer barrel (29) an annular gap (25) connecting said chambers (23, 24) and said elastomer members (21, 32) are configured integral, wherein said boss (20) is surrounded by a sheath (31) made of elastomeric material of varying thickness, and said elastomer member (32) is configured essentially cylindrical in protruding from the underside of said plate (11), and comprises at the end face a seat (26) for the spring (35) of said strut (17).

2. The mount as set forth in claim 1, **characterized in that** said inner barrel (18) is elongated into an elongated portion (15) of said outer barrel (29), resulting in said elastomer member (21) jutting into the interspace between said portion (15) and said inner barrel (18).

3. The mount as set forth in claim 1 or 2, **characterized in that** said mount (10) comprises an upper and a lower plate (11, 12) provided with upswept and downswept substantially cylindrical portions (13, 15 respectively) for forming said outer barrel (26).

4. The mount as set forth in claim 3, **characterized in that** said downswept portion (15) of said lower plate (12) translates into a substantially conical portion (16).

5. The mount as set forth in claim 3 or 4, **characterized in that** said lower plate (12) comprises a further portion (33) upswept in the direction of said upper plate (11) and jutting into said portion (13) of said upper plate (11).

6. The mount as set forth in any of the claims 3 to 5, **characterized in that** said elastomer member (21) juts inbetween said plates (11, 12).

7. The mount as set forth in any of the claims 1 to 6, **characterized in that** said seat (26) for seating said spring (36) is supported independently of said inner barrel (18).

8. The mount as set forth in any of the claims 3 to 7, **characterized in that** said mount (10) comprises a plurality of studs (28) for securing to a vehicle body, said studs passing through both plates (11, 12).

## Revendications

1. Palier de soutien pour une jambe de suspension (17) qui présente une tige de piston (34) et un ressort (35), comportant un palier (30) à amortissement hydraulique qui présente une douille intérieure (18) placée sur la tige de piston (34) avec un téton (20) faisant saillie radialement et une douille extérieure (29) qui est reliée via un corps élastomère (21) à la douille intérieure (18) et qui forme avec celle-ci deux chambres (23, 24) qui sont remplies avec un fluide d'amortissement hydraulique et qui sont reliées l'une à l'autre, la douille extérieure (29) présentant une plaque (11) faisant saillie radialement et sur lequel le ressort (35) prend appui via un corps élastomère (32), **caractérisé en ce que** le téton (20) de la douille intérieure (18) forme avec la douille extérieure (29) une fente annulaire (25) reliant les chambres (23, 24), **en ce que** les corps élastomères (21, 32) sont réalisés d'une seul tenant, le téton (20) étant entouré d'une enveloppe (31) en matériau élastomère dont l'épaisseur est variable, et **en ce que** le corps élastomère (32) est réalisé sensiblement cylindrique et en saillie depuis la face inférieure de la plaque (11) et présente sur la face frontale une surface d'appui (26) pour le ressort (35) de la jambe de suspension (17).

2. Palier de soutien selon la revendication 1, **caractérisé en ce que** la douille intérieure (18) est prolongée jusque dans une région (15) allongée de la douille extérieure (29), et **en ce que** le corps élastomère (21) s'étend dans l'espace intermédiaire entre la région (15) et la douille intérieure (18).

3. Palier de soutien selon l'une ou l'autre des revendications 1 et 2, **caractérisé en ce que** le palier de soutien (10) présente une plaque supérieure (11) et une plaque inférieure (12) qui sont pourvues de régions (13, 15) sensiblement cylindriques et en saillie pour former la douille extérieure (26).

4. Palier de soutien selon la revendication 3, **caractérisé en ce que** la région (15) en saillie de la plaque inférieure (12) se transforme en une région (16) sensiblement conique.

5. Palier de soutien selon l'une ou l'autre des revendications 3 et 4, **caractérisé en ce que** la plaque inférieure (12) présente une autre région (33) qui est en saillie en direction de la plaque supérieure (11) et pénètre dans la région (13) de la plaque supérieure (11).

6. Palier de soutien selon l'une des revendications 3 à 5, **caractérisé en ce que** le corps élastomère (21) s'étend entre les plaques (11, 12).

7. Palier de soutien selon l'une des revendications 1 à 6, **caractérisé en ce que** la surface d'appui (26) pour le soutien du ressort (36) est soutenue indépendamment de la douille intérieure (18).

8. Palier de soutien selon l'une des revendications 3 à 7, **caractérisé en ce que** le palier de soutien (10) présente plusieurs goujons (28) pour la fixation sur une carrosserie, lesquels traversent les deux plaques (11, 12).
